# EUROPÄISCHE PATENTSCHRIFT

(11) **EP 4 460 445 B1**
(45) Veröffentlichungstag und Bekanntmachung des Hinweises auf die Patenterteilung: **08.04.2026**
(21) Anmeldenummer: 22851386.7
(22) Anmeldetag: 19.12.2022
(51) Int. Cl.: B60T 7/04, B60T 8/40, B60T 13/14, B60T 13/74, B60T 17/02, B60T 11/26, B60T 13/66, B60T 17/20, B60T 8/32

(54) **BREMSANLAGE FÜR EIN KRAFTFAHRZEUG**
BRAKE SYSTEM FOR VEHICLE
SYSTÈME DE FREINAGE POUR VÉHICULE

(30) Priorität: 07.01.2022 DE 102022200105
(43) Veröffentlichungstag der Anmeldung: 13.11.2024
(73) Patentinhaber: AUMOVIO Germany GmbH, 60488 Frankfurt am Main (DE)
(72) Erfinder: FÜHRER, Jochen, 30175 Hannover (DE); GRÄTSCH, Marc, 30175 Hannover (DE); CASPARI, Roland, 30175 Hannover (DE); MIHM, Sebastian, 30175 Hannover (DE)
(74) Vertreter: Aumovio Corporation
(86) Internationale Anmeldenummer: PCT/DE2022/200306
(87) Internationale Veröffentlichungsnummer: WO 2023/131376

(56) Entgegenhaltungen:
- WO-A1-2019/158242
- DE-A1- 102018 214 564
- DE-A1- 102018 222 478

## Beschreibung

Die Erfindung betrifft eine Bremsanlage für ein Kraftfahrzeug gemäß dem Oberbegriff von Anspruch 1.

In der WO 2019158242 A1 wird eine elektrohydraulische Fremdkraft-Fahrzeugbremsanlage beschrieben. Zwei voneinander unabhängige Fremdkraft-Bremsdruckerzeuger weisen jeweils in Kammern unterteilte Bremsflüssigkeitsvorratsbehälter auf, welche beide an einen weiteren Bremsflüssigkeitsbehälter mit einer einzigen Kammer angeschlossen sind.

Aus der DE 10 2018 214 564 A1 ist ein Bremssystem für ein Kraftfahrzeug mit einem Hauptbremszylinder, insgesamt drei Pumpen und einem Reservoir für Bremsflüssigkeit bekannt. Eine der Pumpen kann Bremsflüssigkeit sowohl aus dem Hauptbremszylinder als auch unmittelbar aus dem Reservoir ansaugen.

Aus der WO 2018/130483 A1 ist eine Bremsanlage ohne Hauptbremszylinder und mit zwei elektrisch steuerbaren Druckquellen für ein Kraftfahrzeug mit vier hydraulisch betätigbaren Radbremsen bekannt. Die Bremsanlage umfasst neben radindividuellen Einlass- und Auslassventilen ein Kreistrennventil sowie weitere drei Trennventile. Die genannten Komponenten sind gemeinsam in einer einzigen Baueinheit angeordnet. Weiterhin sind zwei elektronische Steuer- und Regeleinheiten vorgesehen, wobei eine der elektronischen Steuer- und Regeleinheiten die zweite Druckquelle und die Einlass- und Auslassventile ansteuert, während die erste Druckquelle und alle übrigen Ventile von der anderen elektronische Steuer- und Regeleinheit angesteuert werden. Die Bremsanlage umfasst einen Druckmittelvorratsbehälter mit zwei Behälterkammern, wobei die erste Druckquelle zum Nachsaugen von Druckmittel mit der ersten Behälterkammer hydraulisch verbunden ist und die zweite Druckquelle zum Nachsaugen von Druckmittel mit der zweiten Behälterkammer hydraulisch verbunden ist.

Es ist eine Aufgabe der vorliegenden Erfindung, eine verbesserte, für das hochautomatisierte Fahren geeignete Bremsanlage bereitzustellen, welche die für das hochautomatisierte Fahren notwendige, möglichst hohe Verfügbarkeit bietet. Die Bremsanlage soll insbesondere im Falle einer Leckage im abgestellten Zustand eine verbesserte Betriebsdauer/-verfügbarkeit bieten.

Eine weitere Aufgabe der vorliegenden Erfindung ist es, eine verbesserte, für das hochautomatisierte Fahren geeignete Bremsanlage bereitzustellen, welche auch im Falle einer Leckage eine derart hohe Verfügbarkeit bietet, dass sie ohne eine fahrerbetätigbare hydraulische Rückfallebene auskommt, insbesondere ohne eine mechanisch-hydraulische Verbindung von einer fahrerbetätigbaren Betätigungseinheit (z.B. einem fahrerbetätigbaren Hauptbremszylinder) zu den Radbremsen auskommt.

Diese Aufgabe wird erfindungsgemäß durch eine Bremsanlage gemäß Anspruch 1 gelöst.

Der Erfindung liegt der Gedanke zugrunde, dass die Bremsanlage ein elektrisch betätigbares Einlassventil je Radbremse, eine erste elektrisch betätigbare Druckquelle und eine zweite elektrisch betätigbare Druckquelle, wobei die erste Druckquelle sowie die zweite Druckquelle mit einer Bremsversorgungsleitung verbunden sind, an welche die zumindest vier Einlassventile angeschlossen sind, und einen Druckmittelvorratsbehälter mit einer ersten Behälterkammer und einer zweiten Behälterkammer umfasst, wobei die erste Druckquelle mit der ersten Behälterkammer hydraulisch verbunden ist und wobei die zweite Druckquelle mit der zweiten Behälterkammer hydraulisch verbunden ist. Der Druckmittelvorratsbehälter umfasst eine dritte Behälterkammer und die erste Druckquelle ist über ein elektrisch betätigbares erstes Trennventil mit der dritten Behälterkammer des Druckmittelvorratsbehälters verbunden.

Die Bremsanlage bietet den Vorteil, dass die erste Druckquelle und damit die Bremsversorgungsleitung bzw. die Radbremsen über die Verbindung mit dem ersten Trennventil drucklos geschaltet werden können, aber im Fall einer Leckage über diese Verbindung nur die dritte Behälterkammer leerläuft und Druckmittel in der ersten und zweiten Behälterkammer verbleiben kann, um zumindest für eine vorgebbare Dauer bzw. Wegstrecke eine ausreichende Bremsung des Kraftfahrzeugs sicherzustellen.

Bevorzugt ist das erste Trennventil stromlos offen ausgeführt, so dass die Radbremsen in einem stromlosen Zustand der Bremsanlage über das erste Trennventil mit der dritten Behälterkammer verbunden sind, so dass die Radbremsen drucklos geschaltet sind.

Die erste Druckquelle ist vorteilhafterweise zum Nachsaugen von Druckmittel mit der ersten Behälterkammer hydraulisch verbunden.

Bevorzugt ist die erste Druckquelle über ein in Richtung der ersten Druckquelle öffnendes Rückschlagventil mit der ersten Behälterkammer hydraulisch verbunden. Es handelt sich dabei vorteilhafterweise, wie z.B. aus der WO 2018/130483 A1 an sich bekannt, um ein federbelastetes Rückschlagventil. So kann bei Bedarf Druckmittel aus der ersten Behälterkammer in die erste Druckquelle angesaugt werden, aber es wird ein Leerlaufen der ersten Behälterkammer über die erste Druckquelle verhindert. Besonders bevorzugt ist diese Verbindung der ersten Behälterkammer zu der ersten Druckquelle die einzige hydraulische Anbindung der ersten Behälterkammer zur Bremsanlage bzw. zu den Radbremsen.

Die zweite Druckquelle ist vorteilhafterweise zum Nachsaugen von Druckmittel mit der zweiten Behälterkammer hydraulisch verbunden. Besonders bevorzugt ist eine Saugseite der zweiten Druckquelle mit der zweiten Behälterkammer hydraulisch verbunden. Besonders bevorzugt ist die zweite Druckquelle saugseitig mit der zweiten Behälterkammer und druckseitig mit der Bremsversorgungsleitung hydraulisch verbunden. Ganz besonders bevorzugt umfasst die zweite Druckquelle ein oder mehrere federbelastete Rückschlagventile, welche in der hydraulischen Verbindung zwischen der zweiten Behälterkammer und der Bremsversorgungsleitung angeordnet sind.

Bevorzugt ist der Druckmittelvorratsbehälter ein unter Atmosphärendruck stehender Druckmittelvorratsbehälter.

Bevorzugt ist in der hydraulischen Verbindung zwischen der zweiten Druckquelle (bzw. der Saugseite der zweiten Druckquelle) und der zweiten Behälterkammer kein elektrisch betätigbares Ventil angeordnet. So ist ein Ansaugen von Druckmittel mit geringem hydraulischem Widerstand gegeben.

Bevorzugt ist in der hydraulischen Verbindung zwischen der ersten Druckquelle und der dritten Behälterkammer neben dem ersten Trennventil kein weiteres elektrisch betätigbares Ventil angeordnet. So kann bei Öffnen des ersten Trennventils schnell ein Druckausgleich zwischen Radbremsen und Druckmittelvorratsbehälter hergestellt werden.

Bevorzugt sind die drei Behälterkammern des Druckmittelvorratsbehälters durch Schottwände voneinander getrennt. Druckmittelvorratsbehälter mit getrennten Behälterkammern sind grundsätzlich bekannt, wobei die Trennung der Kammern üblicherweise mittels Schottwänden realisiert wird. So verbleibt bei einem Auslaufen von Druckmittel aus einer der Behälterkammern über den zugehörigen Behälteranschluss in den beiden anderen Behälterkammern eine Druckmittelreserve.

Bevorzugt sind die drei Behälterkammern und zumindest ein Überlauf derart angeordnet und ausgeführt, dass ein Überlaufen von Druckmittel aus der dritten Behälterkammer (direkt) nur in die erste Behälterkammer (und nicht in die zweite Behälterkammer) möglich ist. Bei geschlossenem Kreistrennventil, wenn erster und zweiter Bremskreis getrennt sind, kann bei einem Druckabbau mittels der ersten Druckquelle Druckmittel über das öffnende erste Trennventil in die dritte Behälterkammer abströmen. Überschüssiges Druckmittel geht dann nicht in die zweite Behälterkammer, bzw. den Bremskreis der zweiten Druckquelle, verloren. Es besteht auch die Möglichkeit, mit der ersten Druckquelle Druckmittel aus der ersten Behälterkammer anzusaugen, wobei Überschussdruckmittelvolumen dann über das erste Trennventil in den "richtigen" Bremskreis der ersten Druckquelle abfließt.

Bevorzugt ist die dritte Behälterkammer kleiner als die erste Behälterkammer und kleiner als die zweite Behälterkammer dimensioniert. So kann trotz einer zusätzlichen dritten Behälterkammer der Druckmittelvorratsbehälter kompakt gehalten werden. Durch entsprechende geringe Verkleinerung der ersten und zweiten Behälterkammer kann das Gesamtvolumen des Druckmittelvorratsbehälters beibehalten werden. Eine möglichst kleine dritte Behälterkammer ist auch aus weiteren Gründen vorteilhaft. Im Falle einer Leckagestelle, welche deutlich niedriger liegt als der Druckmittelvorratsbehälter, z.B. an einer der Radbremsen, könnte durch die Druckdifferenz das Rückschlagventil zur ersten Behälterkammer öffnen und die erste Behälterkammer ebenfalls leerlaufen. Das Auslaufen der ersten Behälterkammer endet, sobald durch das erste Trennventil Luft (aus der leergelaufenen dritten Behälterkammer) in den Systemdruckleitungsabschnitt kommt und der Unterdruck zusammenbricht.

Bevorzugt umfasst die Bremsanlage ein elektrisch betätigbares Auslassventil je Radbremse, wobei die Auslassventile stromlos geschlossen ausgeführt sind. Besonders bevorzugt sind die Auslassventile mit der zweiten Behälterkammer verbunden, wie auch die zweite Druckquelle. Besonders bevorzugt sind alle Auslassventile über eine gemeinsame hydraulische Verbindung mit der zweiten Behälterkammer des Druckmittelvorratsbehälters verbunden.

Bevorzugt ist dem ersten Trennventil ein in Richtung der ersten Druckquelle öffnendes Rückschlagventil parallelgeschaltet.

Bevorzugt ist ein elektrisch betätigbares Kreistrennventil in der Bremsversorgungsleitung derart angeordnet, dass bei geschlossenem Kreistrennventil die Bremsversorgungsleitung in einen ersten Leitungsabschnitt und einen zweiten Leitungsabschnitt hydraulisch getrennt wird, wobei der erste Leitungsabschnitt mit der zweiten Druckquelle und zumindest zwei der zumindest vier Einlassventilen hydraulisch verbunden ist und der zweite Leitungsabschnitt mit der ersten Druckquelle und den anderen der zumindest vier Einlassventilen hydraulisch verbunden ist. Besonders bevorzugt ist der zweite Leitungsabschnitt mit der ersten Druckquelle und den anderen zumindest zwei der zumindest vier Einlassventilen hydraulisch verbunden.

Bevorzugt ist das Kreistrennventil stromlos offen ausgeführt, so dass zur Betätigung der / aller Radbremsen mittels einer der Druckquellen das Kreistrennventil nicht angesteuert werden muss.

Bevorzugt ist die erste Druckquelle über ein elektrisch betätigbares, zweites Trennventil mit der Bremsversorgungsleitung verbunden. Durch Schließen des zweiten Trennventils kann die erste Druckquelle (bzw. die erste Baueinheit) hydraulisch von der Bremsversorgungsleitung getrennt werden, z.B. wenn die Bremsanlage in einer Betriebsart betrieben werden soll oder muss (z.B. bei einem elektrischen Ausfall der ersten Baueinheit), in welcher die zumindest vier Radbremsen mittels der zweiten Druckquelle mit Druck beaufschlagt werden. Besonders bevorzugt ist das zweite Trennventil stromlos offen ausgeführt. So sind die Radbremsen in einem stromlosen Zustand der Bremsanlage über das zweite Trennventil und das erste Trennventil mit der dritten Behälterkammer verbunden und drucklos geschaltet.

Bevorzugt ist die erste Druckquelle über einen Systemdruckleitungsabschnitt mit dem zweiten Trennventil verbunden, wobei der Systemdruckleitungsabschnitt über das erste Trennventil mit der dritten Behälterkammer des Druckmittelvorratsbehälters verbunden ist.

Bevorzugt umfasst die Bremsanlage zumindest vier Radanschlüssen für die zumindest vier Radbremsen und in einem stromlosen Zustand der Bremsanlage sind die erste Behälterkammer und die zweite Behälterkammer jeweils von den Radanschlüssen hydraulisch getrennt. So können die erste sowie die zweite Behälterkammer in einem ausgeschalteten Zustand der Bremsanlage (z.B. bei abgestelltem Fahrzeug) und einer Leckage in einer der Radbremsleitungen (z.B. zwischen Radanschluss und Radbremse) nicht leerlaufen.

Bevorzugt ist die erste Behälterkammer ausschließlich über die erste Druckquelle mit den zumindest vier Radanschlüssen hydraulisch verbunden, wobei die erste Behälterkammer über ein in Richtung der ersten Druckquelle öffnendes, federbelastetes Rückschlagventil mit der ersten Druckquelle hydraulisch verbunden ist. So kann bei Bedarf Druckmittel aus der ersten Behälterkammer in die erste Druckquelle angesaugt werden, um das Druckmittel dann mittels der ersten Druckquelle zu den Radanschlüssen (bzw. in die Radbremsen) zu fördern, aber es wird ein Leerlaufen der ersten Behälterkammer über die erste Druckquelle verhindert.

Bevorzugt ist die zweite Behälterkammer über die stromlos geschlossenen Auslassventile mit den zumindest vier Radanschlüssen hydraulisch verbunden. Besonders bevorzugt ist die zweite Behälterkammer weiterhin über die zweite Druckquelle mit den zumindest vier Radanschlüssen hydraulisch verbunden, wobei die zweite Druckquelle zumindest ein in Richtung der Radanschlüsse öffnendes, federbelastetes Rückschlagventil umfasst, so dass die zweite Behälterkammer über das oder die federbelasteten Rückschlagventile der zweiten Druckquelle mit den zumindest vier Radanschlüssen hydraulisch verbunden ist. Eine weitere (dritte) hydraulische Verbindung zwischen der zweiten Behälterkammer und den zumindest vier Radanschlüssen ist besonders bevorzugt nicht vorhanden. So kann bei Bedarf Druckmittel mittels der zweiten Druckquelle aus der zweiten Behälterkammer angesaugt und zu den Radanschlüssen (bzw. in die Radbremsen) gefördert werden. Und es kann bei Bedarf Druckmittel mittels der Auslassventile in die zweite Behälterkammer abgelassen werden. Ein Leerlaufen der zweiten Behälterkammer wird aber im stromlosen Zustand der Bremsanlage verhindert.

Bevorzugt ist die erste Druckquelle und deren Verbindung zur ersten Behälterkammer derart ausgeführt, dass in einem stromlosen Zustand der Bremsanlage keine hydraulische Verbindung zwischen der ersten Behälterkammer und den Radanschlüssen der Bremsanlage bzw. den Radbremsen besteht, über welche Druckmittel aus der ersten Behälterkammer in eine der Radbremsen abfließen kann.

Bevorzugt ist die Bremsanlage derart ausgeführt, dass in einem stromlosen Zustand der Bremsanlage keine hydraulische Verbindung zwischen der ersten Behälterkammer und den Radanschlüssen der Bremsanlage bzw. den Radbremsen besteht, über welche Druckmittel aus der ersten Behälterkammer in eine der Radbremsen abfließen kann.

Bevorzugt ist die zweite Druckquelle und deren Verbindung zur zweiten Behälterkammer derart ausgeführt, dass in einem stromlosen Zustand der Bremsanlage keine hydraulische Verbindung zwischen der zweiten Behälterkammer und den Radanschlüssen der Bremsanlage bzw. den Radbremsen besteht, über welche Druckmittel aus der zweite Behälterkammer in eine der Radbremsen abfließen kann.

Bevorzugt ist die Bremsanlage derart ausgeführt, dass in einem stromlosen Zustand der Bremsanlage keine hydraulische Verbindung zwischen der zweiten Behälterkammer und den Radanschlüssen der Bremsanlage bzw. den Radbremsen besteht, über welche Druckmittel aus der zweite Behälterkammer in eine der Radbremsen abfließen kann.

Gemäß einer bevorzugten Weiterbildung der Erfindung ist die zweite Druckquelle zwei- oder mehr-kreisig ausgeführt. Besonders bevorzugt ist die zweite Druckquelle als eine Zwei-Kolben-Pumpe oder Mehr-Kolben-Pumpe ausgeführt.

Besonders bevorzugt sind die Druckseiten der zwei- oder mehr-kreisigen Druckquelle zusammengeschaltet (z.B. zu einem gemeinsamen Druckanschluss) und die Saugseiten der zwei- oder mehr-kreisigen Druckquelle zusammengeschaltet (zu einem gemeinsamen Sauganschluss).

Die Saugseite (bzw. der Sauganschluss) der zweiten Druckquelle ist besonders bevorzugt gemeinsam mit den Auslassventilen mit der zweiten Behälterkammer des Druckmittelvorratsbehälters verbunden.

Die Druckseite (bzw. der Druckanschluss) der zweiten Druckquelle ist bevorzugt mit dem ersten Leitungsabschnitt der Bremsversorgungsleitung verbunden.

Bevorzugt wird die erste Druckquelle durch eine Zylinder-Kolben-Anordnung mit einem hydraulischen Druckraum gebildet, deren Kolben durch einen elektromechanischen Aktuator für einen Bremsdruckaufbau vor- und für einen Bremsdruckabbau zurückgefahren wird.

Besonders bevorzugt wird die erste Druckquelle durch eine Zylinder-Kolben-Anordnung mit einem hydraulischen Druckraum, einem Sauganschluss und einem Druckanschluss gebildet wird, deren Kolben durch einen elektromechanischen Aktuator vor- und zurückgefahren wird. Der Sauganschluss ist vorteilhafterweise über das in Richtung der ersten Druckquelle öffnende Rückschlagventil mit der ersten Behälterkammer des Druckmittelvorratsbehälters verbunden. Der Druckanschluss ist vorteilhafterweise mit der Bremsversorgungsleitung, insbesondere dem zweiten Leitungsabschnitt, verbunden. Ganz besonders bevorzugt ist der Druckanschluss zusätzlich über das erste Trennventil mit der dritten Behälterkammer des Druckmittelvorratsbehälters verbunden.

Bevorzugt umfasst die Bremsanlage eine erste elektronische Steuervorrichtung, welche die erste Druckquelle ansteuert, und eine zweite elektronische Steuervorrichtung, welche die zweite Druckquelle und die Einlassventile, und insbesondere die Auslassventile, ansteuert.

Gemäß einer Weiterbildung der Erfindung umfasst die Bremsanlage eine erste Baueinheit, in welcher die erste elektrisch betätigbare Druckquelle angeordnet ist, und eine zweite Baueinheit, in welcher die zweite elektrisch betätigbare Druckquelle und die elektrisch betätigbaren Einlassventile angeordnet sind, wobei der Druckmittelvorratsbehälter an der ersten Baueinheit angeordnet ist. Besonders bevorzugt sind die Auslassventile in der zweiten Baueinheit angeordnet.

Bevorzugt sind die erste Baueinheit und die zweite Baueinheit durch höchstens ein druckfestes hydraulisches Verbindungselement miteinander verbunden.

Weitere nicht-druckfeste Verbindungselemente zwischen erster und zweiter Baueinheit sind möglich.

Bevorzugt wird unter einem druckfesten Verbindungselement bzw. einer druckfesten An-/Verbindung verstanden, dass das Verbindungselement bzw. die An-/Verbindung auf einen maximalen Betriebsdruck einer der Druckquellen, insbesondere der ersten Druckquelle, und/oder der Radbremsen ausgelegt ist. Besonders bevorzugt ist das druckfeste Verbindungselement bzw. die druckfeste An-/Verbindung auf einen Druck von etwa 180-220 bar ausgelegt. Ganz besonders bevorzugt ist das druckfeste Verbindungselement bzw. die druckfeste An-/Verbindung auf einen Druck von etwa 200 bar ausgelegt.

Bevorzugt wird unter einem nicht-druckfesten Verbindungselement bzw. einer nicht-druckfesten An-/Verbindung verstanden, dass das Verbindungselement bzw. die An-/Verbindung nicht auf den maximalen Betriebsdruck der Radbremsen ausgelegt ist. Besonders bevorzugt ist ein nicht-druckfestes Verbindungselement bzw. eine nicht-druckfeste An-/Verbindung auf einen maximalen Druck von etwa 10 bar ausgelegt.

Die erste Baueinheit und die zweite Baueinheit sind bevorzugt derart ausgeführt, dass sie durch höchstens ein druckfestes hydraulisches Verbindungselement miteinander verbunden sind. Die erste Baueinheit und die zweite Baueinheit können durch mehrere hydraulische Verbindungselemente miteinander verbunden sein, jedoch ist höchstens eines - im Sinne von nur eines - dieser hydraulischen Verbindungselemente druckfest ausgeführt. Eventuelle andere hydraulische Verbindungselement sind nicht druckfest ausgeführt.

Bevorzugt sind die erste Baueinheit und die zweite Baueinheit durch lediglich ein hydraulisches Verbindungselement miteinander verbunden, wobei dieses Verbindungselement druckfest ausgeführt ist, d.h. das druckfeste hydraulische Verbindungselement ist. Weitere, nicht-druckfeste Verbindungselemente, vorteilhafterweise zwischen der zweite Baueinheit und dem Druckmittelvorratsbehälter, sind möglich.

Bevorzugt ist das erste Trennventil in der ersten Baueinheit angeordnet.

Bevorzugt sind die Auslassventile in der zweiten Baueinheit angeordnet.

Bevorzugt ist das Kreistrennventil in der zweiten Baueinheit angeordnet.

Bevorzugt ist das zweite Trennventil in der zweiten Baueinheit angeordnet.

Eine Aufteilung in zwei Baueinheiten bietet gegenüber einer Realisierung in nur einer Baueinheit den Vorteil, dass beide Baueinheiten jeweils kleiner und leichter und deshalb einfacher zu handhaben sind. Sie können auch einfacher auf vorhandenen Produktionsanlagen hergestellt werden. Andererseits führt bei einer Aufteilung in zwei Baueinheiten jede hydraulische Verbindung zwischen diesen Baueinheiten zu erheblichem Aufwand und erheblichen Kosten. Es ist daher besonders vorteilhaft die Anzahl der hydraulischen Verbindungen möglichst klein zu halten. Es hat sich gezeigt, dass es vorteilhaft ist, die verschiedenen Funktionen von hydraulischen Verbindungen möglichst klar zu trennen. So können Verbindungen, über die Druckmittel angesaugt wird, mit einem möglichst großen Durchmesser ausgeführt werden, damit sie einen möglichst kleinen hydraulischen Widerstand besitzen. Dafür ist es vorteilhaft, wenn erreicht wird, dass solche Verbindungen nicht druckfest sein müssen. Umgekehrt sollten drucktragende Verbindungen keine Ansaugfunktion haben.

Bevorzugt umfasst die erste Baueinheit eine erste elektronische Steuervorrichtung, welche die erste Druckquelle ansteuert, und die zweite Baueinheit umfasst eine zweite elektronische Steuervorrichtung, welche die zweite Druckquelle und die Einlassventile (und ggf. die Auslassventile) ansteuert.

Bevorzugt umfasst die erste Baueinheit einen ersten hydraulischen Anschluss zur Verbindung mit der ersten Behälterkammer, einen dritten hydraulischen Anschluss zur Verbindung mit der dritten Behälterkammer und einen zweiten hydraulischen Anschluss zur Verbindung mit der zweiten Baueinheit, wobei der zweite hydraulische Anschluss mit dem hydraulischen Verbindungselement verbunden ist. Besonders bevorzugt umfasst die erste Baueinheit keinen weiteren hydraulischen Anschluss neben dem ersten hydraulischen Anschluss, dem zweiten hydraulischen Anschluss und dem dritten hydraulischen Anschluss.

Die erste Druckquelle ist bevorzugt mit dem zweiten hydraulischen Anschluss verbunden, um die zumindest vier Radbremsen betätigen zu können.

Die zweite Baueinheit umfasst bevorzugt zumindest vier hydraulische Radanschlüsse zur Verbindung mit den Radbremsen, einen ersten hydraulischen Anschluss zur Verbindung mit der zweiten Behälterkammer und einen zweiten hydraulischen Anschluss zur Verbindung mit der ersten Baueinheit, wobei der zweite hydraulische Anschluss mit dem hydraulischen Verbindungselement verbunden ist. Besonders bevorzugt umfasst die zweite Baueinheit keinen weiteren hydraulischen Anschluss, neben dem ersten hydraulischen Anschluss, dem zweiten hydraulischen Anschluss und den zumindest vier hydraulischen Radanschlüssen.

Bevorzugt wird das erste Trennventil von der ersten elektronischen Steuervorrichtung angesteuert.

Bevorzugt wird das Kreistrennventil von der zweiten elektronischen Steuervorrichtung angesteuert.

Bevorzugt wird das zweite Trennventil von der zweiten elektronischen Steuervorrichtung angesteuert.

Bevorzugt umfasst die Bremsanlage eine erste elektrische Partition und eine zweite elektrische Partition, welche elektrisch unabhängig voneinander sind. Dabei sind die erste Druckquelle und die erste elektronische Steuervorrichtung der ersten elektrischen Partition zugeordnet, und die zweite Druckquelle, die zweite elektronische Steuervorrichtung und die Einlassventile sind der zweiten elektrischen Partition zugeordnet. Besonders bevorzugt sind die Auslassventile und das Kreistrennventil der zweiten elektrischen Partition zugeordnet. Besonders bevorzugt ist das erste Trennventil der ersten elektrischen Partition zugeordnet. Besonders bevorzugt ist das zweite Trennventil der zweiten elektrischen Partition zugeordnet.

Bevorzugt wird die erste elektronischen Steuervorrichtung bzw. die erste elektrische Partition von einer ersten elektrischen Energiequelle versorgt und die zweite elektronischen Steuervorrichtung bzw. die zweite elektrische Partition wird von einer zweiten elektrischen Energiequelle versorgt, welche von der ersten elektrischen Energiequelle unabhängig ist. Die erste Energiequelle ist somit Teil der ersten elektrischen Partition, die zweite Energiequelle ist Teil der zweiten elektrischen Partition.

Bevorzugt wird die erste Druckquelle ausschließlich von der ersten elektronischen Steuervorrichtung angesteuert und die zweite Druckquelle, die Einlass- und Auslassventile und das Kreistrennventil werden ausschließlich von der zweiten elektronischen Steuervorrichtung angesteuert. Besonders bevorzugt wird das erste Trennventil ausschließlich von der ersten elektronischen Steuervorrichtung angesteuert und das zweite Trennventil ausschließlich von der zweitem elektronischen Steuervorrichtung angesteuert.

Die Erfindung bietet den Vorteil, dass durch die Wahl und Anordnung der elektrisch betätigbaren Ventile, insbesondere die elektronische Partitionierung und insbesondere die Zuordnung zwischen elektrisch betätigbaren Ventilen und elektronischen Steuervorrichtungen, eine klare Trennung der Eigenschaften der hydraulischen Verbindungen ermöglicht wird.

Bevorzugt umfasst die Bremsanlage zumindest vier hydraulisch betätigbare Radbremsen.

Bevorzugt umfasst die Bremsanlage pro Radbremse ein Einlassventil sowie ein Auslassventil zum Einstellen radindividueller Bremsdrücke, die aus dem Bremsversorgungsdruck in der Bremsversorgungsleitung abgeleitet werden, wobei im nicht-angesteuerten Zustand die Einlassventile den Bremsversorgungsdruck zu den Radbremsen weiterleiten und die Auslassventile ein Abströmen von Druckmittel aus den Radbremsen sperren.

Bevorzugt umfasst die Bremsanlage neben der ersten und zweiten Druckquelle kein weitere Druckquelle zum Aufbau eines Bremsdruckes zur Betätigung der Radbremsen. Bevorzugt umfasst die Bremsanlage weder eine weitere elektrisch betätigbare Druckquelle noch eine Fahrer-betätigbare Druckquelle, wie z.B. einen Hauptbremszylinder, welche mit zumindest einer der Radbremsen zu deren Betätigung wirkverbunden ist, z.B. hydraulisch oder mechanisch verbunden ist.

Bevorzugt umfasst die Bremsanlage eine Betätigungseinheit für einen Fahrzeugführer, wobei die Betätigungseinheit mit zumindest einer elektronischen Steuervorrichtungen zur Übermittlung eines Fahrerwunschsignals verbunden ist und wobei keine mechanisch-hydraulische Verbindung von der Betätigungseinheit zu den Radbremsen besteht.

Die erfindungsgemäße Bremsanlage bietet den Vorteil, dass die Bremsanlage auch bei Ausfall einer der beiden redundanten elektrischen Druckquellen, z.B. aufgrund eines Ausfalls der ihr zugeordneten elektrischen Energiequelle oder der ihr zugeordneten elektronischen Steuervorrichtung oder eines mechanischen Fehlers oder einer Leckage in einem der beiden Bremskreise, die wichtigsten Rest-Bremsfunktionen über eine geforderte Zeit und/oder Fahrstrecke aufrechterhalten kann.

Die erfindungsgemäße Bremsanlage ist daher besonders zur Realisierung von hochautomatisierten Fahrfunktionen sowie zur Verwendung mit einem elektrischen Bremspedal, welches keine mechanisch-hydraulische Verbindung zu den Radbremsen besitzt, geeignet.

Weitere bevorzugte Ausführungsformen der Erfindung ergeben sich aus den Unteransprüchen und der nachfolgenden Beschreibung anhand von Figuren.

Es zeigen schematisch
Fig. 1 ein erstes Ausführungsbeispiel einer erfindungsgemäßen Bremsanlage, und
Fig. 2 ein zweites Ausführungsbeispiel einer erfindungsgemäßen Bremsanlage.

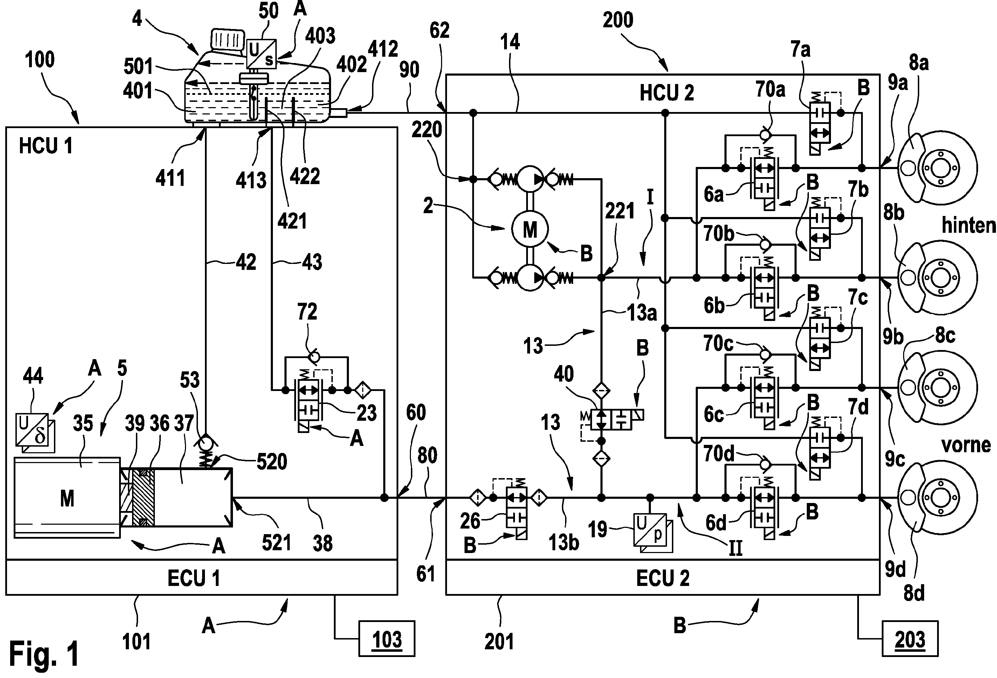

**In** Fig. 1 ist ein erstes Ausführungsbeispiel einer erfindungsgemäßen Bremsanlage für ein Kraftfahrzeug stark schematisch dargestellt. Beispielsgemäß ist die Bremsanlage zur Betätigung von vier hydraulisch betätigbaren Radbremsen 8a-8d ausgebildet, eine Erweiterung auf mehr Radbremsen ist einfach möglich. Beispielsgemäß sind die Radbremsen 8a, 8b der Hinterachse (rear) und die Radbremsen 8c, 8d der Vorderachse (front) des Fahrzeugs zugeordnet.

Die Bremsanlage umfasst eine erste elektrisch betätigbare Druckquelle 5 und eine zweite elektrisch betätigbare Druckquelle 2. Zur Betätigung der Radbremsen 8a-8d sind die erste Druckquelle 5 sowie die zweite Druckquelle 2 (druckseitig) mit einer Bremsversorgungsleitung 13 verbunden, an welche die vier Radbremsen 8a-8d über jeweils ein Einlassventil 6a-6d angeschlossen sind. So können alle vier Radbremsen 8a-8d mittels der ersten Druckquelle 5 oder mittels der zweiten Druckquelle 2 betätigt werden.

Die Bremsanlage umfasst einen Druckmittelvorratsbehälter 4 mit drei Behälterkammern 401, 402, 403. Dabei ist die erste Behälterkammer 401 der ersten Druckquelle 5 und die zweite Behälterkammer 402 der zweiten Druckquelle 2 zugeordnet. Zum Nachsaugen von Druckmittel ist entsprechend die erste Druckquelle 5 (saugseitig) über ein in Richtung der ersten Behälterkammer 401 schließendes Rückschlagventil 53 mit der ersten Behälterkammer 401 hydraulisch verbunden. Zum Nachsaugen von Druckmittel ist die zweite Druckquelle 2 (saugseitig) direkt mit der zweiten Behälterkammer 402 hydraulisch verbunden. Die dritte, separate Behälterkammer 403 ist vorgesehen, um bei Bedarf einen Druckausgleich der Radbremsen 8a-8d durchführen zu können, d.h. insbesondere die Radbremsen 8a-8d drucklos schalten zu können. Hierzu ist die erste Druckquelle 5, und damit auch die Bremsversorgungsleitung 13 zu den Radbremsen 8a-8d, über ein elektrisch betätigbares Trennventil 23 mit der dritten Behälterkammer 403 trennbar verbunden.

Vorteilhafterweise ist die erste elektrisch steuerbare Druckquelle 5 als eine hydraulische Zylinder-Kolben-Anordnung (bzw. ein elektrohydraulischer Aktuator (Linearaktuator)) ausgebildet.

Vorteilhafterweise ist die zweite elektrisch steuerbare Druckquelle 2 als eine Kolben-Pumpe ausgeführt, beispielsgemäß als eine Zwei-Kolben-Pumpe, deren zwei Druckseiten zusammengeschaltet sind und deren zwei Saugseiten zusammengeschaltet sind.

In der Bremsversorgungsleitung 13 ist vorteilhafterweise ein elektrisch betätigbares Kreistrennventil 40 angeordnet, so dass bei geschlossenem Kreistrennventil 40 die Bremsversorgungsleitung 13 in einen ersten Leitungsabschnitt 13a, an welchen die Einlassventile 6a, 6b bzw. die Radbremsen 8a, 8b angeschlossen sind, und einen zweiten Leitungsabschnitt 13b, an welchen die Einlassventile 6c, 6d bzw. die Radbremsen 8c, 8d angeschlossen sind, getrennt wird. Die zweite Druckquelle 2 ist mit dem ersten Leitungsabschnitt 13a hydraulisch verbunden und die erste Druckquelle 5 ist mit dem zweiten Leitungsabschnitt 13b hydraulisch verbunden. Bei geschlossenen Kreistrennventil 40 ist die Bremsanlage somit in zwei hydraulische Bremskreise I und II aufgetrennt oder aufgeteilt. Dabei ist im ersten Bremskreis I die Druckquelle 2 (über den ersten Leitungsabschnitt 13a) mit nur noch den Radbremsen 8a und 8b verbunden, und im zweiten Bremskreis II die erste Druckquelle 5 (über den zweiten Leitungsabschnitt 13b) mit nur noch den Radbremsen 8c und 8d verbunden. Das Kreistrennventil 40 ist vorteilhafterweise stromlos offen ausgeführt.

Je Radbremse 8a-8d ist neben dem elektrisch betätigbaren, vorteilhafterweise stromlos offen ausgeführten, Einlassventil 6a-6d, ein elektrisch betätigbares, vorteilhafterweise stromlos geschlossen ausgeführtes, Auslassventil 7a-7d vorgesehen.

Die Bremsanlage umfasst, wie bereits erwähnt, den, vorteilhafterweise unter Atmosphärendruck stehenden, Druckmittelvorratsbehälter 4 mit drei Behälterkammern 401, 402, 403. Dabei ist der ersten Kammer 401 ein erster Behälteranschluss 411, der zweiten Kammer 402 ein zweiter Behälteranschluss 412 und der dritten Kammer 403 ein dritter Behälteranschluss 413 zugeordnet. Dabei ist die erste Behälterkammer 401 der ersten Druckquelle 5 und die zweite Behälterkammer 402 der zweiten Druckquelle 2 zugeordnet. Zum Nachsaugen von Druckmittel ist die erste Druckquelle 5 (saugseitig, beispielsgemäß über einen Sauganschluss 520 und eine (Nachsaug)Leitung 42) mit der ersten Behälterkammer 401 hydraulisch verbunden. **In** der (Nachsaug)Leitung 42 ist ein in Richtung der ersten Behälterkammer 401 des Druckmittelvorratsbehälters 4 schließendes Rückschlagventil 53 angeordnet. Zum Nachsaugen von Druckmittel ist die zweite Druckquelle 2 (saugseitig, beispielsgemäß über einen Sauganschluss 220, eine Leitung 14 und einen Schlauch 90) direkt mit der zweiten Behälterkammer 402 hydraulisch verbunden.

Die dritte, separate Behälterkammer 403 ist vorgesehen, um bei Bedarf einen Druckausgleich der Radbremsen 8a-8d durchführen zu können, d.h. insbesondere die Radbremsen 8a-8d drucklos schalten zu können. Hierzu ist die erste Druckquelle 5, und damit auch die Bremsversorgungsleitung 13 zu den Radbremsen 8a-8d, über ein elektrisch betätigbares, vorteilhafterweise stromlos offen ausgeführtes, Trennventil 23 mit der dritten Behälterkammer 403 trennbar verbunden.

So kann mittels des Trennventils 23 die erste Druckquelle 5 drucklos geschaltet werden bzw. die Radbremsen 8a-8d sind im stromlosen Zustand der Bremsanlage drucklos geschaltet.

Druckmittelvorratsbehälter 4 ist beispielsgemäß durch zwei Schottwände in drei Behälterkammern 401, 402, 403 geteilt. Beispielsweise umfasst der Druckmittelvorratsbehälter 4 eine erste Schottwand 421 und eine zweite Schottwand 422, wobei die erste Behälterkammer 401 von der dritten Behälterkammer 403 durch die erste Schottwand 421 getrennt ist und die dritte Behälterkammer 403 von der zweiten Behälterkammer 402 durch die zweite Schottwand 422 getrennt ist. Eine andere Reihenfolge der Behälterkammern bzw. eine andere relative Anordnung der drei Behälterkammern ist möglich. Grundsätzlich kann der Druckmittelvorratsbehälter 4 auch mehr als drei Behälterkammern aufweisen, allerdings ist dies mit höheren Herstellungskosten verbunden.

Die dritte Behälterkammer 403 des Druckmittelvorratsbehälters 4 kann sehr klein dimensioniert werden (die dritte Behälterkammer 403 ist kleiner als die erste Behälterkammer 401 und kleiner als die zweite Behälterkammer 402). Der Bauraum für den Druckmittelvorratsbehälter 4 kann genauso groß, wie bei einem an sich bekannten Druckmittelvorratsbehälter 4 mit zwei Kammern gewählt werden, d.h. der Druckmittelvorratsbehälter 4 vergrößert sich nicht.

Die drei Behälterkammern 401, 402, 403 und zumindest ein Überlauf zwischen ihnen sind derart angeordnet und ausgeführt, dass ein (direkter) Überlauf von Druckmittel aus der dritten Behälterkammer 403 nur in die erste Behälterkammer 401 möglich ist, und nicht in die zweite Behälterkammer 402.

Vorteilhafterweise umfasst die Bremsanlage zur Leckageüberwachung eine Pegelmesseinrichtung 50 zur Erfassung oder Bestimmung eines Druckmittel-Pegels (Druckmittelstandes) des Druckmittelvorratsbehälters 4. Die Pegelmesseinrichtung 50 ist dazu ausgebildet auch Druckmittel-Pegel des Druckmittels in dem Druckmittelvorratsbehälter 4 zu erfassen, welche oberhalb der Schottwände 421, 422 liegen. Z.B. erkennt die Pegelmesseinrichtung 50 einen zu niedrigen Druckmittel-pegel (Druckmittelstand), und schließt insbesondere das Kreistrennventil 40, wenn der Druckmittel-Pegel unter den Grenzpegel 501 fällt. Grenzpegel 501 liegt dabei oberhalb der Schottwände 421, 422.

Beispielsgemäß ist die Pegelmesseinrichtung 50 in der ersten Behälterkammer 401 angeordnet. Eine Positionierung der Pegelmesseinrichtung 50 in derjenigen Behälterkammer (401), welche der Druckquelle zugeordnet ist, welche als hydraulische Zylinder-Kolben-Anordnung (Linearaktuator) ausgebildet ist (erste Druckquelle 5), bietet den Vorteil einer schnelleren Erkennung eines Druckmittelverlusts. Im Fall einer externen Leckage würde über den Linearaktuator bei einer Bremsung sehr schnell Druckmittel nach außen gepumpt und das Druckmittel fließt innerhalb des Druckmittelvorratsbehälters 4 mit begrenzter Geschwindigkeit nach (besonders bei Kälte). Um den Druckmittelverlust schnell melden zu können, ist es daher vorteilhaft, die Pegelmesseinrichtung 50 nahe an der Stelle zu platzieren, an der mit einem großen Abfluss zu rechnen ist, d.h. in der der ersten Druckquelle 5 (Linearaktuator) zugeordneten Behälterkammer 401.

Die Bremsanlage umfasst beispielsgemäß eine erste Baueinheit 100, welche z.B. als ein erstes elektrohydraulisches Bremsensteuergerät (HECU1) mit einem Ventilblock HCU1 und einer ersten elektronischen Steuervorrichtung 101 (ECU1) ausgeführt ist, und eine zweite Baueinheit 200, welche z.B. als ein zweites elektrohydraulisches Bremsensteuergerät (HECU2) mit einem Ventilblock HCU2 und einer zweiten elektronischen Steuervorrichtung 201 (ECU2) ausgeführt ist.

In der ersten Baueinheit 100 ist die erste elektrisch betätigbare Druckquelle 5 angeordnet.

In der zweiten Baueinheit 200 sind die zweite elektrisch betätigbare Druckquelle 2 sowie die radindividuellen Bremsdruckmodulationsventile (Einlassventile 6a-6d und Auslassventile 7a-7d) angeordnet.

Der Druckmittelvorratsbehälter 4 ist beispielsgemäß an der ersten Baueinheit 100 angeordnet.

Die Bremsanlage umfasst, wie bereits erwähnt, je hydraulisch betätigbarer Radbremse 8a-8d ein Einlassventil 6a-6d und ein Auslassventil 7a-7d, die paarweise über Mittenanschlüsse hydraulisch zusammengeschaltet und jeweils mit einem hydraulischen Radanschluss 9a-9d der zweiten Baueinheit 200 verbunden sind, an welche die entsprechende Radbremse 8a-8d angeschlossen ist. Den Einlassventilen 6a-6d ist jeweils ein zu der Bremsversorgungsleitung 13 hin öffnendes Rückschlagventil 70a-70d parallelgeschaltet. Die Ausgangsanschlüsse der Auslassventile 7a-7d sind über eine gemeinsame Leitung 14 mit einem hydraulischen Anschluss 62 der zweiten Baueinheit 200 verbunden, welcher mit dem Druckmittelvorratsbehälter 4 bzw. dessen Behälterkammer 402 verbunden ist. Die Eingangsanschlüsse aller Einlassventile 6a-6d können mittels der Bremsversorgungsleitung 13 (bei offenem Kreistrennventil 40) mit einem Druck versorgt werden, der von der ersten Druckquelle 5 oder, z.B. bei Ausfall der ersten Druckquelle 5, von der zweiten Druckquelle 2 bereitgestellt wird.

Die erste elektrisch steuerbare Druckquelle 5 des Ventilblocks HCU1 ist als eine hydraulische Zylinder-Kolben-Anordnung (bzw. ein einkreisiger elektrohydraulischer Aktuator (Linearaktuator)) ausgebildet, deren Kolben 36 von einem schematisch angedeuteten Elektromotor 35 unter Zwischenschaltung eines ebenfalls schematisch dargestellten Rotations-Translationsgetriebes 39 betätigbar ist, insbesondere vor- und zurückgefahren werden kann, um einen Druck in einem Druckraum 37 auf- und abzubauen. Der Kolben 36 begrenzt den Druckraum 37 der Druckquelle 5. Zur Ansteuerung des Elektromotors 35 ist ein die Rotorlage des Elektromotors 35 erfassender, lediglich schematisch angedeuteter Rotorlagensensor 44 vorgesehen.

An den Druckraum 37 der ersten elektrisch steuerbaren Druckquelle 5 ist ein Systemdruckleitungsabschnitt 38 angeschlossen. Mittels Leitungsabschnitt 38 ist Druckquelle 5 bzw. Druckraum 37 mit einem hydraulischen Anschluss 60 der ersten Baueinheit 100 verbunden, welcher über ein hydraulisches Verbindungselement 80 mit einem hydraulischen Anschluss 61 der zweiten Baueinheit 200 verbunden ist. Verbindung 80 stellt die einzige hydraulische Druckverbindung, insbesondere die einzige hydraulische Verbindung, zwischen der ersten und der zweiten Baueinheit dar. Es handelt sich dabei um eine hydraulische Verbindung zur Übertragung eines Bremsdrucks zur Betätigung der Radbremsen 8a-8d. Verbindungselement 80 muss daher druckfest ausgeführt sein.

Druckraum 37 ist, unabhängig vom Betätigungszustand des Kolbens 36, über die (Nachsaug)Leitung 42 mit dem ersten Behälteranschluss 411 des Druckmittelvorratsbehälters 4, und damit der Behälterkammer 401, verbunden. In der Leitung 42 ist das in Richtung des Druckmittelvorratsbehälters 4 schließende Rückschlagventil 53 angeordnet. Die Zylinder-Kolben-Anordnung 5 weist beispielsgemäß keine Schnüffellöcher auf.

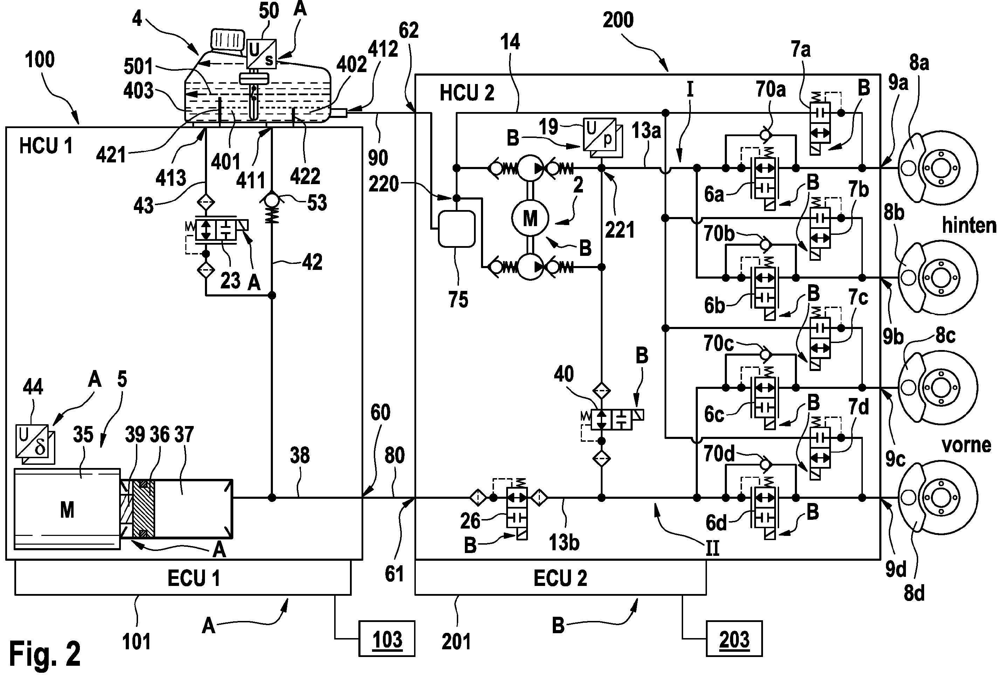

Weiterhin ist der Druckraum 37 der ersten Druckquelle 5, beispielsgemäß über den Leitungsabschnitt 38, das Trennventil 23 und eine Leitung 43, mit dem dritten Behälteranschluss 413 des Druckmittelvorratsbehälters 4, und damit der Behälterkammer 403, verbunden. Dem Trennventil 23 ist beispielsgemäß ein in Richtung des Druckraums 37 öffnendes Rückschlagventil 72 parallelgeschaltet. Ein solches Rückschlagventil 72 ist funktional jedoch nicht notwendig (siehe auch im zweiten Ausführungsbeispiel der Fig. 2).

Neben den zwei (drucklosen) Anschlüssen zu den Behälterkammern 401, 403 und dem (Druck)Anschluss 60 umfasst die erste Baueinheit 100 keine weiteren hydraulischen Anschlüsse.

Die zweite elektrisch steuerbare Druckquelle 2 ist beispielsgemäß als eine Zwei-Kolben-Pumpe ausgeführt, deren zwei Druckseiten zusammengeschaltet sind (Druckanschluss 221) und deren zwei Saugseiten zusammengeschaltet sind (Sauganschluss 220). Die Saugseiten (Sauganschluss 220) sind mit der Leitung 14 und somit dem Anschluss 62 bzw. 412, und damit der zweiten Behälterkammer 402, verbunden. Die Druckseiten (Druckanschluss 221) sind mit dem ersten Leitungsabschnitt 13a der Bremsversorgungsleitung 13 verbunden.

Neben der Druckquelle 2 und den Bremsdruckmodulationsventilen 6a-6d, 7a-7d ist in der zweiten Baueinheit 200 beispielsgemäß ein elektrisch betätigbares, vorteilhafterweise stromlos offen ausgeführtes, Trennventil 26 angeordnet. Trennventil 26 ist hydraulisch zwischen der ersten Druckquelle 5, speziell dem Anschluss 61, und dem zweiten Leitungsabschnitt 13b der Bremsversorgungsleitung 13 angeordnet. Somit ist die erste Druckquelle 5 über das Trennventil 26 mit dem zweiten Leitungsabschnitt 13b bzw. der Bremsversorgungsleitung 13 trennbar verbunden.

Die Bremsanlage umfasst beispielsgemäß im Bremskreis II (Leitungsabschnitt 13b) einen Drucksensor 19, welcher somit der Druckquelle 5 zugeordnet ist. Drucksensor 19 kann aber auch im Bremskreis I angeordnet sein (siehe Ausführungsbeispiel der Fig. 2) oder es kann ein zweiter Drucksensor vorgesehen sein, so dass jeder der beiden Bremskreis I und II mittels eines Drucksensors direkt überwacht werden kann.

Beispielsgemäß sind die Komponenten 5, 53, 23, 72 sowie die Leitungsabschnitte 38, 42, 43 in dem ersten Ventilblock HCU1 angeordnet und die Komponenten 2, 40, 6a-6d, 7a-7d, 26, 19 sowie die Leitungsabschnitte 13a, 13b (und die Leitungsabschnitte zwischen den Einlass- und Auslassventilen einerseits und den Radanschlüssen andererseits) in dem zweiten Ventilblock HCU2 angeordnet.

Jedem Ventilblock HCU1, HCU2 ist eine elektronische Steuervorrichtung 101, 201 (ECU1, ECU2) zugeordnet. Jede elektronische Steuervorrichtung 101, 201 umfasst elektrische und/oder elektronische Elemente (z.B. Mikrocontroller, Leistungsteile, Ventiltreiber, sonstigen elektronische Bauteile, etc.) zur Ansteuerung der elektrisch betätigbaren Komponenten des zugehörigen Ventilblocks und ggf. der zugeordneten Sensoren. Ventilblock und elektronische Steuervorrichtung sind vorteilhafterweise in bekannter Weise als eine elektrohydraulische Einheit (HECU) ausgeführt.

Zur elektrischen Anbindung, Verbindung und Versorgung der einzelnen elektrischen bzw. elektrisch betätigbaren, ansteuerbaren, auswertbaren o.ä. Komponenten der Bremsanlage sind eine erste elektrische Partition A und eine zweite elektrische Partition B vorgesehen, welche elektrisch unabhängig voneinander sind.

In der Figur sind diejenigen elektrischen Komponenten, welche der ersten elektrischen Partition A zugeordnet sind bzw. dieser angehören, durch einen Pfeil mit A gekennzeichnet, während diejenigen elektrischen Komponenten, welche der zweiten elektrischen Partition B zugeordnet sind bzw. dieser angehören, durch einen Pfeil mit B gekennzeichnet sind.

Die elektronische Steuervorrichtung 101 ist der ersten elektrischen Partition A zugeordnet bzw. gehört dieser an, während die zweite elektronische Steuervorrichtung 201 der zweiten elektrischen Partition B zugeordnet ist bzw. angehört. Entsprechend sind die elektronische Steuervorrichtung 101 und die zweite elektronische Steuervorrichtung 201 elektrisch unabhängig.

Zur Versorgung der Bremsanlage mit elektrischer Energie sind eine erste elektrische Energiequelle 103, z.B. ein Bordnetz, und eine von der ersten Energiequelle unabhängige, zweite elektrische Energiequelle 203, z.B. ein Bordnetz, vorgesehen.

Die erste elektrische Energiequelle 103 versorgt die erste elektrische Partition A mit Energie und die zweite elektrische Energiequelle 203 versorgt die zweite elektrische Partition B.

Die erste elektronische Steuervorrichtung 101 steuert die erste Druckquelle 5 an. Entsprechend ist die erste Druckquelle 5 der ersten elektrischen Partition A zugeordnet bzw. zugehörig. Beispielsgemäß wird die erste Druckquelle 5 über die erste elektronische Steuervorrichtung 101 mit Energie (von der ersten elektrischen Energiequelle 103) versorgt.

Die zweite elektronische Steuervorrichtung 201 steuert die zweite Druckquelle 2 an. Entsprechend ist die zweite Druckquelle 2 der zweiten elektrischen Partition B zugeordnet bzw. zugehörig. Beispielsgemäß wird die zweite Druckquelle 2 über die zweite elektronische Steuervorrichtung 201 mit Energie (von der zweiten elektrischen Energiequelle 203) versorgt.

Beispielsgemäß lässt sich bzw. wird die erste Druckquelle 5 ausschließlich durch die erste elektronische Steuervorrichtung 101 und die zweite Druckquelle 2 ausschließlich durch die zweite elektronische Steuervorrichtung 201 ansteuern bzw. angesteuert. Grundsätzlich wäre es denkbar den Elektromotor einer Druckquelle z.B. mit zwei elektrisch unabhängigen Motorwicklungen auszustatten, so könnte die Druckquelle von den zwei unabhängigen elektrischen Einrichtungen angesteuert werden. Dies wäre jedoch mit weiteren Redundanzen, z.B. zweifachen Verbindungsleitungen etc., verbunden und daher kostenintensiver.

Die übrigen Komponenten der Bremsanlage sind in vorteilhafterweise entweder der ersten elektronischen Steuervorrichtung 101 (Partition A) oder der zweiten elektronischen Steuervorrichtung 201 (Partition B) zugeordnet. D.h. sie werden durch diese Steuervorrichtung angesteuert bzw. betätigt und/oder mit elektrischer Energie versorgt und/oder sind Signalseitig mit dieser Steuervorrichtung verbunden und/oder werden durch diese Steuervorrichtung ausgewertet. Um weitere Redundanzen zu vermeiden, ist vorteilhafterweise eine Komponente lediglich bzw. ausschließlich von einer der beiden elektronischen Steuervorrichtungen 101, 201, nicht aber von der anderen elektronischen Steuervorrichtung, ansteuerbar bzw. betätigbar oder mit elektrischer Energie versorgbar oder signalseitig verbunden oder auswertbar.

Die Einlass- und Auslassventile 6a-6d, 7a-7d sind der zweiten elektrischen Partition B zugeordnet und werden von der zweiten elektronischen Steuervorrichtung 201 angesteuert. Ebenso ist das Kreistrennventil 40 der zweiten elektrischen Partition B zugeordnet und wird von der zweiten elektronischen Steuervorrichtung 201 angesteuert.

Auch das Trennventil 26 zur Trennung von erster Druckquelle 5 und Bremsversorgungsleitung 13 ist der zweiten elektrischen Partition B zugeordnet und wird von der zweiten elektronischen Steuervorrichtung 201 angesteuert.

Drucksensor 19 ist ebenso der zweiten elektrischen Partition B zugeordnet. Seine Signale werden der zweiten elektronischen Steuervorrichtung 201 zugeleitet und von dieser ausgewertet und verarbeitet.

Das Trennventil 23 hingegen ist der ersten elektrischen Partition A zugeordnet und wird von der ersten elektronischen Steuervorrichtung 101 angesteuert.

Weiterhin werden der ersten elektronischen Steuervorrichtung 101 die Signale der Pegelmesseinrichtung 50 zugeleitet und von dieser ausgewertet und verarbeitet.

Die Saugseite 220 der Druckquelle 2 ist über Anschluss 62 und eine Leitung bzw. einen Schlauch 90 direkt, ohne Zwischenschaltung eines elektrisch betätigbaren Ventils mit der zweiten Behälterkammer 402 des Druckmittelvorratsbehälters 4 verbunden. Die Verbindung 90 trägt keinen Druck und kann deshalb einen großen Durchmesser haben.

Die Druckseite 221 der Druckquelle 2 ist direkt, ohne Zwischenschaltung eines Ventils mit dem ersten Leitungsabschnitt 13a verbunden.

Der Druckanschluss 521 der Druckquelle 5 ist über das Trennventil 23, auch Druckabbauventil genannt, mit dem Druckmittelvorratsbehälter 4, speziell der dritten Behälterkammer 403, verbunden.

Bevorzugt sind Trennventil 26, Kreistrennventil 40 und Trennventil23 stromlos offen ausgeführt.

Im Normalbetrieb wird der Druck in den Radbremsen von der Druckquelle 5 bei geschlossenem Trennventil 23 aufgebaut. Abgebaut wird der Druck in die Druckquelle 5 oder über das Trennventil 23. Von den Einlass- und Auslassventilen 6a-6d, 7a-7d wird der Druck bei Bedarf radindividuell moduliert. Gegebenenfalls wird das Trennventil 26 geschlossen, damit die Druckquelle 5 zusätzliches Volumen, z.B. aus der ersten Behälterkammer 401, nachsaugen kann.

Wenn ein besonders hoher Volumenstrom angefordert wird, arbeiten beide Druckquellen 5 und 2 gleichzeitig parallel. In diesem Fall geschieht der Druckabbau zumindest teilweise über das Trennventil 23, das bevorzugt als Analogventil ausgeführt ist, also seinen Durchfluss steuern kann. Der Druckabbau, der nicht über die erste Druckquelle 5 erfolgen kann (sog. Überschussdruckmittelvolumen), kann entweder über das Trennventil 23 oder über die Auslassventile, bevorzugt über die Auslassventile 7a, 7b an der Hinterachse (rear) durchgeführt werden. Wenn ein besonders hoher Druck angefordert wird, wird das Trennventil 26 geschlossen, und die Druckquelle 2 erhöht den Druck über den Druck der Druckquelle 5 hinaus. Außerhalb von Bremsungen ist der atmosphärische Druckausgleich über Trennventil 23 und Trennventil 26 permanent gewährleistet.

Bei einer Leckage in der Bremsanlage wird das Kreistrennventil 40 vorteilhafterweise geschlossen und das System dadurch in zwei unabhängige Bremskreise I und II aufgeteilt.

Bevorzugt wird das Trennventil 23 von der primären ECU 101 angesteuert. Bevorzugt wird das Trennventil 26 von der sekundären ECU 201 angesteuert. Auf diese Ventilzuordnung bezieht sich die folgende Beschreibung des Betriebs im Fehlerfall.

Wenn das Primärsystem elektrisch ausfällt, insbesondere die primäre ECU 101 oder ihre Spannungsversorgung 103 (Ausfall der Partition A), schließt die sekundäre ECU 201 das Trennventil 26, um über die Sekundärdruckquelle 2 Druck aufzubauen. Abgebaut wird Druck über das Trennventil 26 oder über die Auslassventile 7a-7d. Bevorzugt werden die Ein- und Auslassventile von der sekundären ECU 201 (Partition B) angesteuert, so dass der Druck radindividuell moduliert werden kann.

Wenn das Sekundärsystem elektrisch ausfällt, insbesondere die sekundäre ECU 201 oder ihre Spannungsversorgung 203 (Ausfall der Partition B), wird der Druck wie im Normalbetrieb über die primäre Druckquelle 5 und gegebenenfalls das Trennventil 23 auf- und abgebaut. Auf eine radindividuelle Druckregelung muss verzichtet werden, aber eine gemeinsame Modulation der Raddrücke bleibt möglich, um zu verhindern, dass das Fahrzeug durch blockierende Räder destabilisiert wird.

Bevorzugt ist die Zuordnung der Ventile zu den beiden ECUs wie oben beschrieben, das Kreistrennventil 40 wird von der sekundären ECU 201 angesteuert, und das System ist in zwei Aggregate 100, 4 und 200 mit zwei hydraulischen Verbindungsleitungen 80 (druckfest) und 90 (drucklos) aufgeteilt. Diese beiden Aggregate umfassen bevorzugt jeweils eine der beiden ECUs, die zugeordnete Druckquelle und die zugeordneten Ventile.

Die Aufteilung der beispielsgemäßen Bremsanlagen in zwei Baueinheiten bietet gegenüber einer Realisierung in nur einer Baueinheit den Vorteil, dass beide Baueinheiten jeweils kleiner und leichter und deshalb einfacher zu handhaben sind. Sie können auch einfacher auf vorhandenen Produktionsanlagen hergestellt werden. Bei einer Aufteilung in zwei Baueinheiten führt jede hydraulische Verbindung zwischen diesen Baueinheiten zu Mehraufwand und zusätzlichen Kosten. Es ist daher vorteilhaft, die Anzahl der hydraulischen Verbindungen möglichst klein zu halten. Außerdem ist es vorteilhaft, die verschiedenen Funktionen von hydraulischen Verbindungen möglichst klar zu trennen. Verbindungen, über die Druckmittel angesaugt wird, sollen einen möglichst kleinen hydraulischen Widerstand und deshalb einen möglichst großen Durchmesser haben. Dafür ist es vorteilhaft, wenn erreicht wird, dass solche Verbindungen nicht druckfest sein müssen. Umgekehrt sollten drucktragende Verbindungen keine Ansaugfunktion haben.

Die Wahl und Anordnung der elektrisch betätigbaren Ventile, die elektronische Partitionierung und insbesondere die Zuordnung zwischen elektrisch betätigbaren Ventilen und elektronischen Steuervorrichtungen ermöglichen diese vorteilhaften Eigenschaften der hydraulischen Verbindungen der beiden Baueinheiten. Es ermöglicht, dass die beiden Baueinheiten außer den drucklosen Verbindungen zum Druckmittelvorratsbehälter nur eine druckfeste Verbindung benötigen.

Ein besonderer Vorteil der beispielgemäßen Bremsanlage mit einem Druckmittelvorratsbehälter 4 mit zumindest drei Behälterkammern 401, 402, 403 wird im Folgenden erläutert.

Grundsätzlich ist eine Bremsanlage denkbar, welche der Bremsanlage der Fig. 1 entspricht mit dem Unterschied, dass der Druckmittelvorratsbehälter 4 (nur) die zwei Behälterkammern 401, 402 umfasst und das Trennventil 23 Druckmittelvorratsbehälterseitig mit der Leitung 42 bzw. der ersten Behälterkammer 401 verbunden ist. Das heißt, dass der Druckraum 37 der ersten Druckquelle 5 über eine Parallelschaltung von Rückschlagventil 53 und Trennventil 23 (ggf. mit Rückschlagventil 72) mit derselben Behälterkammer 401 verbunden ist. Diese Bremsanlage besitzt den Nachteil, dass bei einer Leckage an der Hinterachse (rear) im ausgeschalteten (stromlosen) Zustand der Bremsanlage die Behälterkammer 401 des Druckmittelvorratsbehälter 4 leerlaufen würde. Beim Starten der Bremsanlage könnte der niedrige Druckmittelstand im Druckmittelvorratsbehälter dann zwar über die Pegelmesseinrichtung 50 erkannt werden und das Kreistrennventil 40 zur Kreistrennung geschlossen werden. Der Hinterachskreis I (inkl. Behälterkammer 402) würde nach wenigen Bremsmanövern durch die Leckage an der Hinterachse (rear) leer sein und ausfallen. An der Vorderachse (front) steht dann nur das Druckmittelvolumen in dem Druckraum 37 der ersten Druckquelle 5 zur Verfügung, die Behälterkammer 401 ist bereits leer. Bei jeder Bremsung geht ein kleines Druckmittelvolumen über die meist unvermeidbare Undichtigkeit des Kreistrennventils 40 sowie der beiden Auslassventile 7c, 7d in dem defekten Hinterachskreis I verloren. Nach einer Anzahl von Bremsungen lässt damit die erzielbare Bremswirkung des Vorderachskreises II kontinuierlich nach bis zum Ausfall. Eine geforderte Betriebsdauer (bzw. Fahrstrecke) der Bremsanlage nach Leckage im abgestellten Zustand wird damit je nach Leckageleitwert der Auslassventile und des Kreistrennventils nicht erreicht.

Der beschriebene Nachteil wird durch die erfindungsgemäße Bremsanlage behoben.

Hierbei umfasst der Druckmittelvorratsbehälter 4 eine zusätzliche dritte Behälterkammer 403, welche z.B. durch zumindest eine Schottwand von der ersten und der zweiter Behälterkammer 401, 402 getrennt ist, wobei die erste Druckquelle 5 bzw. die Bremsversorgungsleitung 13 bzw. der zweite Leitungsabschnitt 13b über das elektrisch betätigbare Trennventil 23 mit der dritten Behälterkammer 403 verbunden ist.

Es wird also der Druckausgleich der Radbremsen zur Atmosphäre über das Trennventil 23 und eine eigene (separate dritte) Behälterkammer 403 im Druckmittelvorratsbehälter 4 realisiert.

Bei einer Leckage an der Hinterachse (rear) im ausgeschalteten Zustand (abgestelltes Fahrzeug) läuft bei der beispielsgemäßen Bremsanlage nur die dritte Behälterkammer 403 leer. Die beiden Hauptkammern (erste und zweite Behälterkammer 401, 402) sind bei der beispielsgemäßen Bremsanlage über (federbelastete) Rückschlag- oder stromlos geschlossene Schaltventile von den Radbremsleitungen (Radanschlüssen 9a-9d) getrennt und können daher nicht leerlaufen. Beim Starten der Bremsanlage wird mittels der Pegelmesseinrichtung 50 der niedrige Druckmittelstand im Druckmittelvorratsbehälter 4 erkannt und das Kreistrennventil 40 zur Kreistrennung geschlossen. Der Hinterachskreis I wird nach wenigen Bremsmanövern durch die Leckage an der Hinterachse (rear) leer sein und ausfallen. An der Vorderachse (front) steht das Druckmittelvolumen im Druckraum 37 der ersten Druckquelle 5 zur Verfügung und zum Ausgleich von Leckage in den defekten Hinterachsbremskreis I über Kreistrennventil 40 und Auslassventile steht das Druckmittelvolumen der ersten Behälterkammer 401 zur Verfügung. Bei entsprechender Dimensionierung des Druckmittelvorratsbehälters 4 lässt sich damit ein weiterer Betrieb über die geforderte Zeit und Fahrstrecke sicherstellen.

Die dritte Behälterkammer 403 des Behälters 4 kann sehr klein dimensioniert werden. Der Bauraum für den Behälter 4 vergrößert sich nicht oder nicht wesentlich.

Im Leckagefall ist nach Schließen des Kreistrennventils 40 unmittelbar ein vollwertiger Zweikreisbetrieb mit Reservevolumen im Behälter 4 möglich. Es sind keine Leckage-Suchroutinen und Konditionierungsroutinen erforderlich.

Die Dauer des Zweikreisbetriebs ist nur durch die Leckagen der Kreistrenn- und Auslassventile sowie das Kammervolumen der entsprechenden Behälterkammer 401 oder 402 begrenzt. Je nach Ort der Leckage (z.B. 8a, 8b, 8c, 8d) wird die Behälterkammer (401 oder 402), die nach Schließen des Kreistrennventils 40 mit der Leckagestelle verbunden ist, schnell entleert. Die andere Behälterkammer (402 oder 401) bleibt gefüllt. Allerdings geht durch eine minimale Leckage des Kreistrennventils 40 (und der Auslassventile 7c, 7d bei intaktem Vorderachskreis I) bei jeder Bremsung ein geringes Volumen Druckmittel verloren. Dadurch ist die Dauer des Zweikreisbetriebs begrenzt.

In Fig. 2 ist ein zweites Ausführungsbeispiel einer erfindungsgemäßen Bremsanlage für ein Kraftfahrzeug schematisch dargestellt. Das zweite Ausführungsbeispiel entspricht weitgehend dem ersten Ausführungsbeispiel. Daher wird im Folgenden auf die Unterschiede zwischen den Ausführungsbeispielen eingegangen.

Druckmittelvorratsbehälter 4 ist beispielsgemäß durch zwei Schottwände in drei Behälterkammern 401, 402, 403 geteilt. Beispielsweise umfasst der Druckmittelvorratsbehälter 4 eine erste Schottwand 421 und eine zweite Schottwand 422, wobei die erste Behälterkammer 401 von der dritten Behälterkammer 403 durch die erste Schottwand 421 getrennt ist und die erste Behälterkammer 401 von der zweiten Behälterkammer 402 durch die zweite Schottwand 422 getrennt ist. Die dritte Behälterkammer 403 ist dabei kleiner als die erste Behälterkammer 401 und kleiner als die zweite Behälterkammer 402 dimensioniert bzgl. ihres Fassungsvolumens.

Beispielsgemäß umfasst die erste Druckquelle 5 nur einen hydraulischen Anschluss, welcher mit dem Systemdruckleitungsabschnitt 38 verbunden ist. Der Systemdruckleitungsabschnitt 38 (und damit der Druckraum 37) ist einerseits über das Trennventil 23 und den Leitungsabschnitt 43 mit dem dritten Behälteranschluss 413 des Druckmittelvorratsbehälters 4, und damit der dritten Behälterkammer 403, verbunden, und andererseits über das Rückschlagventil 53 und den (Nach-saug)Leitungsabschnitt 42 mit dem ersten Behälteranschluss 411 des Druckmittelvorratsbehälters 4, und damit der ersten Behälterkammer 401, verbunden. Dem Trennventil 23 ist beispielsgemäß kein Rückschlagventil parallelgeschaltet.

Die drei Behälterkammern 401, 402, 403 und zumindest ein Überlauf sind derart angeordnet und ausgeführt, dass ein (direktes) Überlaufen von Druckmittel aus der dritten Behälterkammer 403 nur in die erste Behälterkammer 401 (und nicht in die zweite Behälterkammer 402) möglich ist.

Mittels Leitungsabschnitt 38 ist Druckquelle 5 bzw. Druckraum 37 weiterhin mit dem hydraulischen Anschluss 60 der ersten Baueinheit 100 verbunden, welcher über das druckfeste hydraulische Verbindungselement 80 mit dem hydraulischen Anschluss 61 der zweiten Baueinheit 200 verbunden ist. Verbindung 80 ist auch gemäß diesem Ausführungsbeispiel die einzige hydraulische Druckverbindung, insbesondere die einzige hydraulische Verbindung, zwischen der ersten und der zweiten Baueinheit dar.

**In** der zweiten Baueinheit 200 ist der Drucksensor 19 beispielsgemäß im Bremskreis I angeordnet.

Vorteilhafterweise ist in der zweiten Baueinheit ein internes Druckmittelreservoir 75 vorgesehen, mit welchem die zweite Druckquelle 2 saugseitig hydraulisch verbunden ist und welches seinerseits zum Nachlaufen von Druckmittel mit der zweiten Behälterkammer 402 hydraulisch verbunden ist. Mittels des internen Druckmittelreservoirs 75 kann Druckmittel zum Ansaugen für die zweite Druckquelle 2 bereitgehalten werden, so dass ein Ansaugen mit geringerem Widerstand, insbesondere bei tiefen Temperaturen, möglich ist.

## Patentansprüche

1. Bremsanlage für ein Kraftfahrzeug für zumindest vier hydraulisch betätigbare Radbremsen (8a-8d), umfassend ein elektrisch betätigbares Einlassventil (6a-6d) je Radbremse, eine erste elektrisch betätigbare Druckquelle (5) und eine zweite elektrisch betätigbare Druckquelle (2), wobei die erste Druckquelle (5) sowie die zweite Druckquelle (2) mit einer Bremsversorgungsleitung (13) verbunden sind, an welche die zumindest vier Einlassventile (6a-6d) angeschlossen sind, einen Druckmittelvorratsbehälter (4) mit einer ersten Behälterkammer (401) und einer zweiten Behälterkammer (402), wobei die erste Druckquelle (5) mit der ersten Behälterkammer (401) hydraulisch verbunden ist, und wobei die zweite Druckquelle (2) mit der zweiten Behälterkammer (402) hydraulisch verbunden ist, **dadurch gekennzeichnet, dass** der Druckmittelvorratsbehälter (4) eine dritte Behälterkammer (403) umfasst und die erste Druckquelle (5) über ein elektrisch betätigbares erstes Trennventil (23) mit der dritten Behälterkammer (403) des Druckmittelvorratsbehälters (4) verbunden ist.

2. Bremsanlage nach Anspruch 1, **dadurch gekennzeichnet, dass** die drei Behälterkammern (401, 402, 403) durch Schottwände (421, 422) voneinander getrennt sind.

3. Bremsanlage nach Anspruch 1 oder 2, **dadurch gekennzeichnet, dass** die dritte Behälterkammer (403) kleiner als die erste Behälterkammer (401) und kleiner als die zweite Behälterkammer (402) ausgeführt ist.

4. Bremsanlage nach einem der vorhergehenden Ansprüche, **dadurch gekennzeichnet, dass** diese ein elektrisch betätigbares Auslassventil (7a-7d) je Radbremse umfasst, wobei die Auslassventile (7a-7d) stromlos geschlossen ausgeführt sind, und mit der zweiten Behälterkammer (402) verbunden sind.

5. Bremsanlage nach einem der vorhergehenden Ansprüche, **dadurch gekennzeichnet, dass** ein elektrisch betätigbares, insbesondere stromlos offenes, Kreistrennventil (40) in der Bremsversorgungsleitung (13) derart angeordnet ist, dass bei geschlossenem Kreistrennventil (40) die Bremsversorgungsleitung (13) in einen ersten Leitungsabschnitt (13a) und einen zweiten Leitungsabschnitt (13b) hydraulisch getrennt wird, wobei der erste Leitungsabschnitt (13a) mit der zweiten Druckquelle (2) und zumindest zwei der zumindest vier Einlassventilen (6a, 6b) hydraulisch verbunden ist und der zweite Leitungsabschnitt (13b) mit der ersten Druckquelle (5) und den anderen, insbesondere zumindest zwei, der zumindest vier Einlassventilen (6c, 6d) hydraulisch verbunden ist.

6. Bremsanlage nach einem der der vorhergehenden Ansprüche, **dadurch gekennzeichnet, dass** die erste Druckquelle (5) über ein elektrisch betätigbares, insbesondere stromlos offenes, zweites Trennventil (26) mit der Bremsversorgungsleitung (13) verbunden ist.

7. Bremsanlage nach einem der vorhergehenden Ansprüche, **gekennzeichnet durch** eine erste Baueinheit (100), in welcher die erste elektrisch betätigbare Druckquelle (5) angeordnet ist, und eine zweite Baueinheit (200), in welcher die zweite elektrisch betätigbare Druckquelle (2) und die elektrisch betätigbaren Einlassventile angeordnet sind, wobei der Druckmittelvorratsbehälter (4) an der ersten Baueinheit (100) angeordnet ist.

8. Bremsanlage nach Anspruch 7, **dadurch gekennzeichnet, dass** die erste Baueinheit (100) und die zweite Baueinheit (200) durch höchstens ein druckfestes hydraulisches Verbindungselement (80) miteinander verbunden sind.

9. Bremsanlage nach Anspruch 7 oder 8, **dadurch gekennzeichnet, dass** die erste Baueinheit (100) einen ersten hydraulischen Anschluss zur Verbindung mit dem Druckmittelvorratsbehälter (4), insbesondere mit der ersten Behälterkammer (401), einen dritten hydraulischen Anschluss zur Verbindung mit dem Druckmittelvorratsbehälter (4), insbesondere mit der dritten Behälterkammer (403), und einen zweiten hydraulischen Anschluss (60) zur Verbindung mit der zweiten Baueinheit (200) umfasst, wobei der zweite hydraulische Anschluss (60) mit dem hydraulischen Verbindungselement (80) verbunden ist.

10. Bremsanlage nach Anspruch 9, **dadurch gekennzeichnet, dass** die erste Baueinheit (100) keinen weiteren hydraulischen Anschluss umfasst.

11. Bremsanlage nach einem der Ansprüche 9 oder 10, **dadurch gekennzeichnet, dass** die erste Druckquelle (5), insbesondere zum Betätigen der zumindest vier Radbremsen (8a-8d), mit dem zweiten hydraulischen Anschluss (60) verbunden ist.

12. Bremsanlage nach einem der Ansprüche 7 bis 11, **dadurch gekennzeichnet, dass** das erste Trennventil (23) in der ersten Baueinheit (100) angeordnet ist.

13. Bremsanlage nach einem der Ansprüche 7 bis 12, **dadurch gekennzeichnet, dass** die zweite Baueinheit (200) zumindest vier hydraulische Radanschlüsse (9a-9d) zur Verbindung mit den Radbremsen (8a-8d), einen ersten hydraulischen Anschluss (62) zur Verbindung mit dem Druckmittelvorratsbehälter (4), insbesondere der zweiten Behälterkammer (402), und einen zweiten hydraulischen Anschluss (61) zur Verbindung mit der ersten Baueinheit (100) umfasst, wobei der zweite hydraulische Anschluss (61) mit dem hydraulischen Verbindungselement (80) verbunden ist.

14. Bremsanlage nach einem der Ansprüche 7 bis 13, rückbezogen auf Anspruch 5, **dadurch gekennzeichnet, dass** das Kreistrennventil (40) in der zweiten Baueinheit (200) angeordnet ist.

15. Bremsanlage nach einem der Ansprüche 7 bis 14, rückbezogen auf Anspruch 6, **dadurch gekennzeichnet, dass** das zweite Trennventil (26) in der zweiten Baueinheit (200) angeordnet ist.

16. Bremsanlage nach einem der vorhergehenden Ansprüche mit zumindest vier Radanschlüssen (9a-9d) für die zumindest vier Radbremsen (8a-8d), **dadurch gekennzeichnet, dass** in einem stromlosen Zustand der Bremsanlage sowohl die erste Behälterkammer (401) von den Radanschlüssen (9a-9d) hydraulisch getrennt ist als auch die zweite Behälterkammer (402) von den Radanschlüssen (9a-9d) hydraulisch getrennt ist.

17. Bremsanlage nach einem der vorhergehenden Ansprüche, **dadurch gekennzeichnet, dass** die erste Druckquelle (5) über ein in Richtung der ersten Druckquelle (5) öffnendes Rückschlagventil (53) mit der ersten Behälterkammer (401) verbunden ist.

18. Bremsanlage nach einem der vorhergehenden Ansprüche, **dadurch gekennzeichnet, dass** die drei Behälterkammern (401, 402, 403) und zumindest ein Überlauf derart angeordnet und ausgeführt sind, dass ein Überlauf von Druckmittel aus der dritten Behälterkammer (403) nur in die erste Behälterkammer (401) möglich ist.

## Claims

1. A brake system for a motor vehicle for at least four hydraulically actuatable wheel brakes (8a-8d), comprising one electrically actuatable inlet valve (6a-6d) per wheel brake, a first electrically actuatable pressure source (5), and a second electrically actuatable pressure source (2), wherein the first pressure source (5) and the second pressure source (2) are connected to a brake supply line (13) to which the at least four inlet valves (6a-6d) are attached, a pressure medium storage reservoir (4) with a first reservoir chamber (401) and a second reservoir chamber (402), wherein the first pressure source (5) is hydraulically connected to the first reservoir chamber (401), and wherein the second pressure source (2) is hydraulically connected to the second reservoir chamber (402), **characterised in that** the pressure medium storage reservoir (4) comprises a third reservoir chamber (403) and the first pressure source (5) is connected to the third reservoir chamber (403) of the pressure medium storage reservoir (4) via an electrically actuatable first separation valve (23).

2. The brake system of claim 1, **characterised in that** the three reservoir chambers (401, 402, 403) are separated from each other by bulkheads (421, 422).

3. The brake system of claim 1 or 2, **characterised in that** the third reservoir chamber (403) is designed so as to be smaller than the first reservoir chamber (401) and smaller than the second reservoir chamber (402).

4. The brake system of any one of the preceding claims, **characterised in** comprising one electrically actuatable outlet valve (7a-7d) per wheel brake, wherein the outlet valves (7a-7d) are designed so as to be closed when de-energised and are connected to the second reservoir chamber (402).

5. The brake system of any one of the preceding claims, **characterised in that** an electrically actuatable circuit separation valve (40), which is in particular open when de-energised, is arranged in the brake supply line (13) such that, when the circuit separation valve (40) is closed, the brake supply line (13) is hydraulically separated into a first line section (13a) and a second line section (13b), wherein the first line section (13a) is hydraulically connected to the second pressure source (2) and to at least two of the at least four inlet valves (6a, 6b), and the second line section (13b) is hydraulically connected to the first pressure source (5) and to the others, in particular at least two, of the at least four inlet valves (6c, 6d).

6. The brake system of any one of the preceding claims, **characterised in that** the first pressure source (5) is connected to the brake supply line (13) via an electrically actuatable second separation valve (26), which is in particular open when de-energised.

7. The brake system of any one of the preceding claims, **characterised by** a first structural unit (100), in which the first electrically actuatable pressure source (5) is arranged, and a second structural unit (200), in which the second electrically actuatable pressure source (2) and the electrically actuatable inlet valves are arranged, wherein the pressure medium storage reservoir (4) is arranged on the first structural unit (100).

8. The brake system of claim 7, **characterised in that** the first structural unit (100) and the second structural unit (200) are connected to each other by at most one pressure-resistant hydraulic connecting element (80).

9. The brake system of claim 7 or 8, **characterised in that** the first structural unit (100) comprises a first hydraulic port for connection to the pressure medium storage reservoir (4), in particular to the first reservoir chamber (401), a third hydraulic port for connection to the pressure medium storage reservoir (4), in particular to the third reservoir chamber (403), and a second hydraulic port (60) for connection to the second structural unit (200), wherein the second hydraulic port (60) is connected to the hydraulic connecting element (80).

10. The brake system of claim 9, **characterised in that** the first structural unit (100) does not comprise any further hydraulic port.

11. The brake system of any one of claims 9 or 10, **characterised in that** the first pressure source (5), in particular for actuating the at least four wheel brakes (8a-8d), is connected to the second hydraulic port (60).

12. The brake system of any one of claims 7 to 11, **characterised in that** the first separation valve (23) is arranged in the first structural unit (100).

13. The brake system of any one of claims 7 to 12, **characterised in that** the second structural unit (200) comprises at least four hydraulic wheel ports (9a-9d) for connection to the wheel brakes (8a-8d), a first hydraulic port (62) for connection to the pressure medium storage reservoir (4), in particular the second reservoir chamber (402), and a second hydraulic port (61) for connection to the first structural unit (100), wherein the second hydraulic port (61) is connected to the hydraulic connecting element (80).

14. The brake system of any one of claims 7 to 13, when dependent on claim 5, **characterised in that** the circuit separation valve (40) is arranged in the second structural unit (200).

15. The brake system of any one of claims 7 to 14, when dependent on claim 6, **characterised in that** the second separation valve (26) is arranged in the second structural unit (200).

16. The brake system of any one of the preceding claims with at least four wheel ports (9a-9d) for the at least four wheel brakes (8a-8d), **characterised in that**, in a de-energised state of the brake system, both the first reservoir chamber (401) is hydraulically separated from the wheel ports (9a-9d) and the second reservoir chamber (402) is hydraulically separated from the wheel ports (9a-9d).

17. The brake system of any one of the preceding claims, **characterised in that** the first pressure source (5) is connected to the first reservoir chamber (401) via a non-return valve (53) opening towards the first pressure source (5).

18. The brake system of any one of the preceding claims, **characterised in that** the three reservoir chambers (401, 402, 403) and at least one overflow are arranged and designed such that overflow of pressure medium from the third reservoir chamber (403) is possible only into the first reservoir chamber (401).

## Revendications

1. Système de freinage pour véhicule automobile pour au moins quatre freins de roue (8a-8d) actionnables hydrauliquement, comprenant une soupape d'admission (6a-6d) actionnable électriquement pour chaque frein de roue, une première source de pression (5) actionnable électriquement et une seconde source de pression (2) actionnable électriquement, dans lequel la première source de pression (5) ainsi que la seconde source de pression (2) sont reliées à une conduite d'alimentation de freinage (13), à laquelle sont raccordées les au moins quatre soupapes d'admission (6a-6d), un réservoir de fluide sous pression (4) comprenant une première chambre de réservoir (401) et une deuxième chambre de réservoir (402), dans lequel la première source de pression (5) est reliée hydrauliquement à la première chambre de réservoir (401), et dans lequel la seconde source de pression (2) est reliée hydrauliquement à la deuxième chambre de réservoir (402), **caractérisé en ce que** le réservoir de fluide sous pression (4) comprend une troisième chambre de réservoir (403) et la première source de pression (5) est reliée à la troisième chambre de réservoir (403) du réservoir de fluide sous pression (4) par l'intermédiaire d'une première soupape de séparation (23) actionnable électriquement.

2. Système de freinage selon la revendication 1, **caractérisé en ce que** les trois chambres de réservoir (401, 402, 403) sont séparées les unes des autres par des cloisons (421, 422).

3. Système de freinage selon la revendication 1 ou 2, **caractérisé en ce que** la troisième chambre de réservoir (403) est de plus petite taille que la première chambre de réservoir (401) et de plus petite taille que la deuxième chambre de réservoir (402).

4. Système de freinage selon l'une des revendications précédentes, **caractérisé en ce qu'**il comprend une soupape d'échappement (7a-7d) actionnable électriquement pour chaque frein de roue, dans lequel les soupapes d'échappement (7a-7d) sont réalisées de manière fermée en l'absence de courant, et sont reliées à la deuxième chambre de réservoir (402).

5. Système de freinage selon l'une des revendications précédentes, **caractérisé en ce qu'**une soupape de séparation de circuit (40) actionnable électriquement, en particulier ouverte en l'absence de courant, est disposée dans la conduite d'alimentation de freinage (13) de sorte que, lorsque ladite soupape de séparation de circuit (40) est fermée, la conduite d'alimentation de freinage (13) est hydrauliquement séparée en un premier tronçon de conduite (13a) et un second tronçon de conduite (13b), dans lequel le premier tronçon de conduite (13a) est relié hydrauliquement à la seconde source de pression (2) et à au moins deux des au moins quatre soupapes d'admission (6a, 6b), et le second tronçon de conduite (13b) est relié hydrauliquement à la première source de pression (5) et aux autres, en particulier à au moins deux, des au moins quatre soupapes d'admission (6c, 6d).

6. Système de freinage selon l'une des revendications précédentes, **caractérisé en ce que** la première source de pression (5) est reliée à la conduite d'alimentation de freinage (13) par l'intermédiaire d'une seconde soupape de séparation (26) actionnable électriquement, en particulier ouverte en l'absence de courant.

7. Système de freinage selon l'une des revendications précédentes, **caractérisé par** une première unité de construction (100), dans lequel est disposée la première source de pression (5) actionnable électriquement, et une seconde unité de construction (200), dans laquelle sont disposées la seconde source de pression (2) actionnable électriquement et les soupapes d'admission actionnables électriquement, dans lequel le réservoir de fluide sous pression (4) est disposé sur la première unité de construction (100).

8. Système de freinage selon la revendication 7, **caractérisé en ce que** la première unité de construction (100) et la seconde unité de construction (200) sont reliées l'une à l'autre par au plus un élément de liaison hydraulique étanche à la pression (80).

9. Système de freinage selon la revendication 7 ou 8, **caractérisé en ce que** la première unité de construction (100) comprend un premier raccord hydraulique pour la liaison avec le réservoir de fluide sous pression (4), en particulier avec la première chambre de réservoir (401), un troisième raccord hydraulique pour la liaison avec le réservoir de fluide sous pression (4), en particulier avec la troisième chambre de réservoir (403), et un deuxième raccord hydraulique (60) pour la liaison avec la seconde unité de construction (200), dans lequel le deuxième raccord hydraulique (60) est relié à l'élément de liaison hydraulique (80).

10. Système de freinage selon la revendication 9, **caractérisé en ce que** la première unité de construction (100) ne comprend aucun autre raccord hydraulique.

11. Système de freinage selon l'une des revendications 9 ou 10, **caractérisé en ce que** la première source de pression (5) est reliée au deuxième raccord hydraulique (60), en particulier pour actionner les au moins quatre freins de roue (8a-8d).

12. Système de freinage selon l'une des revendications 7 à 11, **caractérisé en ce que** la première vanne de séparation (23) est disposée dans la première unité de construction (100).

13. Système de freinage selon l'une des revendications 7 à 12, **caractérisé en ce que** la seconde unité de construction (200) comprend au moins quatre raccords hydrauliques de roue (9a-9d) pour la liaison avec les freins de roue (8a-8d), un premier raccord hydraulique (62) pour la liaison avec le réservoir de fluide sous pression (4), en particulier avec la deuxième chambre de réservoir (402), et un deuxième raccord hydraulique (61) pour la liaison avec la première unité de construction (100), dans lequel le deuxième raccord hydraulique (61) est relié à l'élément de liaison hydraulique (80).

14. Système de freinage selon l'une des revendications 7 à 13, avec renvoi à la revendication 5, **caractérisé en ce que** la soupape de séparation de circuit (40) est disposée dans la seconde unité de construction (200).

15. Système de freinage selon l'une des revendications 7 à 14, avec renvoi à la revendication 6, **caractérisé en ce que** la seconde soupape de séparation (26) est disposée dans la seconde unité de construction (200).

16. Système de freinage selon l'une des revendications précédentes, comprenant au moins quatre raccords de roue (9a-9d) pour les au moins quatre freins de roue (8a-8d), **caractérisé en ce que**, dans un état hors tension du système de freinage, la première chambre de réservoir (401) est hydrauliquement séparée des raccords de roue (9a-9d) de même que la deuxième chambre de réservoir (402) est hydrauliquement séparée des raccords de roue (9a-9d).

17. Système de freinage selon l'une des revendications précédentes, **caractérisé en ce que** la première source de pression (5) est reliée à la première chambre de réservoir (401) par l'intermédiaire d'une soupape de non-retour (53) ouvrant en direction de la première source de pression (5).

18. Système de freinage selon l'une des revendications précédentes, **caractérisé en ce que** les trois chambres de réservoir (401, 402, 403) et au moins un trop-plein sont disposés et réalisés de sorte qu'un débordement de fluide sous pression depuis la troisième chambre de réservoir (403) n'est possible que vers la première chambre de réservoir (401).
